# EUROPEAN PATENT SPECIFICATION

(11) **EP 0 744 005 B1**
(45) Date of publication and mention of the grant of the patent: **22.04.1998**
(21) Application number: 95908885.7
(22) Date of filing: 11.01.1995
(51) Int. Cl.: F02F 1/00, F02F 1/20, F16J 10/04, C23C 4/00, C23C 4/06

(54) **A METHOD OF MANUFACTURING A CYLINDER LINER, AND SUCH A LINER**
VERFAHREN ZUR HERSTELLUNG EINER ZYLINDERLAUFBÜCHSE UND DERARTIGE ZYLINDERLAUFBÜCHSE
PROCEDE DE PRODUCTION D'UNE CHEMISE DE CYLINDRE ET CHEMISE AINSI OBTENUE

(30) Priority: 08.02.1994 DK 16494
(43) Date of publication of application: 27.11.1996
(73) Proprietor: MAN B&W Diesel A/S, 2450 Copenhagen SV (DK)
(72) Inventor: KNUDSEN, Thomas, Synnestvedt, DK-3520 Farum (DK)
(74) Representative: Indahl, Peter Jensen
(86) International application number: DK9500021
(87) International publication number: WO9521994

(56) References cited:
- DE-A- 2 852 534
- DE-B- 1 771 640
- GB-A- 2 146 409
- US-A- 3 896 009
- US-A- 4 233 072
- US-A- 4 495 907
- PATENT ABSTRACTS OF JAPAN, Vol. 7, No. 193, M-238; & JP,A,58 093 947, (ISUZU JIDOSHA K.K.), 3 June 1983

## Description

The invention relates to a method of manufacturing a cylinder liner for an internal combustion engine, particularly for a large two-stroke crosshead engine, wherein a liner blank is spray-coated on its cylindrical inner surface with at least one hard wearing layer by means of thermal spraying, such as plasma arc spraying or flame spraying, which layer in its uncovered state may form a running surface for a piston sliding in the liner, and wherein a running-in layer which is softer than the wearing layer is applied to the inner surface of the cylinder liner.

Such a method is known from Japanese patent application published under No. 51-151414, wherein a wearing layer consisting of an aluminium alloy with a high content of Si or an iron alloy with a high content of Cr is sprayed onto the inner surface of a cylinder liner of aluminium, whereupon the coating sprayed on is honed in a grinding machine and immersed in several chemical baths, whereupon the last one is used for deposition of an Sn coating in a thickness of 5-10 µm on the outer surface of the wearing layer. Allegedly, the running-in layer should lower both the size and the number of pores in the hard, honed wearing layer. Instead of Sn, the running-in layer may consist of a manganese phosphate-treated film or a film of PTFE.

Other cylinder liners having coated hard wearing layers, but without a proper running-in layer, are also known, vide Japanese patent applications published under Nos. 56-156751, 56-156752, 60-125362, 59-150080 and 61-157875 and US patent No. 4,233,072. Furthermore, several commercially manufactured cylinder liners having hard wearing layers, but without a proper running-in layer, are known. A common feature of the known cylinder liners is that the hard wearing layer is honed or otherwise machined to obtain a roughness in the range of 0.2 µm < Ra ≤ 1.6 µm (from N5 to N7).

In case of cylinder liners for cars, the internal diameter of the liner is so suitably small that the roughness-reducing machining of the wearing layer can be carried out on generally available machining tools, but of course the machining involves costs and renders the manufacturing of the liners more difficult.

In large two-stroke crosshead engines, the cylinder liners have an internal diameter of about 0.25-0.9 m. Honing of these liners is extremely time-consuming, and in case of the largest liners, can only be carried out few places in the world owing to the heavy requirements to the size of the honing machinery. For the large engines, commercial use of liners with a coated wearing layer has therefore been considered unrealistic.

The object of the invention is to simplify the method of manufacturing cylinder liners with a wearing layer and a running-in layer.

With this object in view, the above method according to the invention is characterized in that the surface roughness of the hard wearing layer(s) provided by the spraying is maintained, as the running-in layer is applied to the wearing layer surface without any further roughness-reducing, mechanical machining thereof, apart from a possible trueing.

Quite unexpectedly it has proved possible to dispense with the roughness-reducing machining of the wearing layer sprayed on, the roughness Ra of which without honing exceeds 3.2 µm (N9) and is typically in the range of 12.5 µm < Ra ≤ 50 µm (between N11 and N12), that is, a maximum roughness which is from about 4 to 35 times greater than in the previously known machined wearing layers.

The running-in layer deposits itself around the largest roughnesses on the wearing layer so that the highest points of the wearing layer are not pressed so hard against the contact surface of the piston rings towards the liner that the piston rings are scratched. Shortly after a new liner has been put into operation, the running-in layer will be worn down over the highest points of the wearing layer so that these points are removed by the piston rings. Hard particles from projecting points on the wearing layer sink into the running-in layer in the areas where the wearing layer has depressions. These depressions are naturally larger than in the known liners, because the wearing layer has not been machined to a low roughness. The depressions are therefore better suited to receive loose hard particles, which reduces the risk of undesired wear on the piston rings.

In an embodiment which is particularly simple to manufacture, the running-in layer is sprayed onto the inner surface of the liner, and the roughness of the running-in layer provided by the spraying is only smoothed out when the liner is put into operation. By spraying on both the wearing layer and the running-in layer, the use of the known chemical baths is completely avoided, and the machining of the liner can be finished with only one type of machinery. Additionally, the spraying-on of the running-in layer provides the advantages that the two layers have a comparable roughness, and that the running-in layer acquires many projecting points from where soft particles are immediately torn loose, when the liner is put into operation, and are deposited in the depressions in the surface of the liner. This means that the roughness of the inner surface of the liner will by itself be reduced to a suitably low level, and at the same time depressions in the wearing layer will be filled efficiently with a softer material.

Preferably, before the application of the running-in layer, the liner is spray-coated with an intermediate layer, the hardness of which is lower than the average hardness of the wearing layer, but higher than the hardness of the running-in layer. The intermediate layer also acts as a wearing layer, but provides a smooth transition from the running-in layer to the hardest wearing layer, which is an advantage to the running-in of the liner. The intermediate layer results in the fact that the first-applied hard wearing layer is uncovered very slowly and only after a long period of operation of the liner.

A particularly simple manufacturing of the liner can be obtained through a preferred method, wherein both the wearing layer and the running-in layer are sprayed on to the inner surface of the cylinder liner by means of thermal spraying, and the layers sprayed on are not substantially subjected to any other machining during manufacturing than a possible trueing. If the spraying-on of the layers can be carried out without large local variations in thickness, the trueing of the layers can be avoided, and in that case the liner blank can be finished merely by spraying the desired number of layers directly one after the other on the inner surface of the liner. Two or more wearing layers may be applied with a mutually decreasing hardness in a direction towards the running surface.

In a method which is optimum for the running-in of the liner, but more difficult with regard to manufacturing, the powder composition used is adjusted during the spraying so that the layers merge evenly into each other. Thus, sharp boundaries between the layers are avoided, and the running surface will only change its character slowly during the life of the liner from consisting of a cohesive surface of pure running-in material into consisting of a cohesive surface of a hard wear-resistant material.

The invention also relates to a cylinder liner for an internal combustion engine, particularly for a large two-stroke crosshead engine, comprising a liner blank which carries on its cylindrical inner surface at least one hard wearing layer which is sprayed on by means of thermal spraying, such as plasma arc or flame spraying, and which may form a running surface for the piston rings of the piston sliding in the liner, when the wearing layer is uncovered and in direct contact with the piston rings, and in its unused condition has a softer running-in layer.

According to the invention, this liner is characterized in that the surface roughness of at least 3.2 µm < Ra (N9), and preferably in the interval of 12.5 µm < Ra ≤ 50 µm (from N11 to N12), provided through spraying-on of the hard wearing layer(s), is maintained as the running-in layer is applied to the wearing layer surface without any roughness-reducing, mechanical finishing machining apart from a possible trueing. The advantages of having the wearing layer retain the roughness provided through the spraying appear from the above explanation of the invention. It may be mentioned that the surface roughness of N9 is a roughness in the range of 3.2 µm < Ra ≤ 6.3 µm.

In a preferred embodiment, the running-in layer includes or consists of graphite balls coated with metal, such as molybdenum, aluminium, silver, or nickel, and possibly silver. The metal-coated graphite balls have extremely good dry lubricating properties which permit a relatively large amount of particles to be released from the running-in layer during the initial running-in. The released particles may contribute to the lubrication between the outer surface of the piston rings and the inner surface of the liner. Particles torn loose from the highest points of the running-in layer will for the most part be deposited at the deepest points of the layer, which reduces the roughness of the inner surface of the liner. As the running-in layer is worn away, the wearing layer is uncovered, but simultaneously with the uncovering, the highest points are worn away so that the piston rings themselves and concurrently with the wearing away of the running-in layer reduce the roughness of the wearing layer itself. The uncovered areas of the wearing layer will therefore have a roughness substantially lower than the roughness at manufacturing.

If the metal-coated graphite balls in the running-in layer are mixed with silver, the running-in layer achieves a greater strength, and at the same time the dry lubricating properties are improved.

The difference between the hardness and the strength of the running-in layer and the wearing layer can suitably be reduced by providing the two layers of the liner with an intermediate layer of a mixture of molybdenum and molybdenum oxide, which in a manner known *per se* reduces the risk of seizing between the piston rings and the liner. The mixture of molybdenum and molybdenum oxide further provides a wearing layer having a substantially greater hardness than the running-in layer so that the piston rings are only gradually made to run against a harder surface.

Cylinder liners for large engines are conventionally made of cast iron, which restricts both the mechanical loads and the temperature load to which the liner may be subjected. It is therefore desirable to manufacture the liner from another material, such as steel, but as is known, steel has very poor sliding properties and therefore cannot constitute the running surface for the piston rings.

In a preferred embodiment wherein the blank of the liner is made of steel and thus can be subjected to substantially larger loads than the cylinder liners for large engines so far commercially available, the hardness of the running-in layer is in the interval from 70 to 130 HV, the hardness of the optional intermediate layer is in the interval from 250 to 750 HV and the micro-hardness of the wearing surface is up to 2000 HV. The very hard wearing layer nearest the steel liner blank ensures that the piston rings do not wear through the wearing layer, and the low hardness of the running-in layer prevents damage to the piston rings during the initial running-in of the liner.

The wearing layer preferably consists of a soft matrix comprising chromium, nickel and/or molybdenum, wherein hard particles are embedded, such as Cr₃C₂, Ni₃C, MoC, Cr₂O₃, and/or BN. Such a layer is very wear-resistant, because the soft matrix provides a good anchorage of the very hard particles that prevent wearing down of the layer. The arrangement of the hard particles in a soft and ductile matrix is particularly advantageous in the wearing layer according to the invention, as the good grip of the soft basic material in the hard particles counteracts the tearing off of the most projecting areas of the very rough coating.

Examples of embodiments of the invention will now be described in further detail below with reference to the very schematic drawing, in which
Fig. 1 is a perspective view showing part of a cylinder liner according to the invention, and
Fig. 2 is a view in a greatly enlarged scale of part of the material of the liner near the running surface for the piston rings.

A cylinder liner generally designated 1 for a large two-stroke diesel engine having a bore of 80 cm is composed of an upper part 2 of steel and a lower part 3 of cast iron or steel. When the liner is mounted in the engine, a contact surface 4 facing downwards abuts the upper side of the frame box or cylinder section of the engine, and the cylinder cover presses down against a contact surface 5 facing upwards, so that the liner section between the contact surfaces is clamped down and retains the liner, while the lower part 3 extends down into the engine. The heat load and the pressure influence from the combustion chamber delimited by the cover, the liner 1, and the piston are largest on the upper part 2 of the liner. Therefore, the upper part 2 has the greatest need of being formed from steel, which necessitates the spray-application of a wearing layer, because the piston rings cannot slide directly against the steel surface. It is, of course, possible to manufacture the whole liner integrally and entirely of steel.

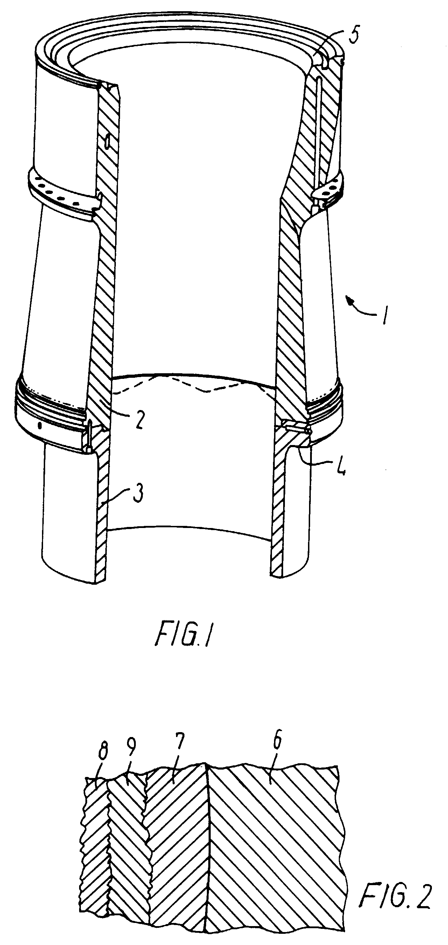

As shown in Fig. 2, the steel blank 6 of the liner has had a hard wearing layer 7, a running-in layer 8 and an intermediate layer 9 therebetween applied to its cylindrical inner surface. As mentioned above, it is possible to omit the intermediate layer 9, just as the intermediate layer may also be divided into more wearing layers than the one shown. However, the running-in layer 8 is a necessity, just as the wearing layer 6 is to protect the piston rings against contact with the steel.

The wearing layer is sprayed on the basic liner or liner blank 6 in a known manner, for example by means of thermal spraying with a plasma torch, supplied with a powdered starting material. The spraying may also be performed by high-speed flame spraying. Methods of spraying are known and described, for example, in patents Nos. EP-B-0 341 672 and EP-A-0 203 556. The liner blank 6 is arranged on a turntable with its longitudinal axis in a vertical position, and the spraying device, which is displaceable along a vertical axis parallel with the longitudinal axis of the cylinder, is arranged with the torch in a suitable position in relation to the inner surface of the liner blank 6. The turntable is made to rotate at 25 revolutions per minute, for example, and the torch is ignited, and the spraying of the wearing layer commences simultaneously with the torch being displaced translationally at for example 6 mm per sec. The spraying material may be supplied in such an amount that the rotating inner surface of the liner is coated with a coating in a thickness of about 0.02 mm, each time the torch is moved once over the surface. The hard wearing layer 7 is applied in a thickness of, for example, 1 mm, but also other thicknesses, such as 0.5 mm or 2 mm can be used.

After the application of the wearing layer 7, the spraying device is filled with the powdered starting material that gives the intermediate layer 9 the desired composition. The intermediate layer may, for example, be applied in the same thickness as the wearing layer 7, but often an intermediate layer of half the thickness will be sufficient to produce the desired increasing hardness of the running surface of the liner.

The running-in layer 8 may be made thinner than the hard wearing layer 6, particularly if an intermediate layer 9 is also used. The running-in layer may, for example, be applied in a layer of even thickness, which may be selected in the interval from, for example, 0.1 mm to 1.5 mm.

Instead of applying two or three layers with a uniform composition of materials, the powdered starting material may be varied so that the powder composition changes gradually from being of the wearing layer type to being of the running-in type, just as the composition associated with several wearing layers may be varied. It is, of course, possible to have the powder composition vary continuously, but preferably the torch is moved through, for example, five or ten spray-applications on the whole inner surface of the liner, before the powder composition is changed. As only 0.02 mm is applied per time, this will still result in a finely graduated transition from the hardest to the softest sprayed-on layer.

An applied layer can be trued by means of turning or grinding, if there are undesirably large variations in the layer thickness, for example caused by a nonuniform powder supply, start or stop of the torch or nonhomogeneous coating as a result of stoppages, such as partial blocking of the torch nozzle, etc. Apart from such a possible machining for the purpose of observing the main dimensions of the wearing layer, no mechanical, roughness-reducing finishing machining of the wearing layer is carried out.

Examples of compositions of the individual layers will now be described below.

The wearing layer 7 may as a whole consist of a very hard material, such as ceramics or a mixture of ceramics and metal, so-called cermet. Alternatively, the wearing layer may consist of very hard particles in a soft metallic matrix or basic structure. The matrix may comprise chromium, nickel, and molybdenum, and the hard particles embedded therein may consist of carbide and/or oxides or nitrides, such as Cr₃C₂, Ni₃C, MoC, Cr₂O₃, and BN. The macro-hardness of such a composite layer may be in the interval from 58 to 71 RC_{62.5}. The micro-hardness of the layer varies from about 250 HV in the basic structure and up to about 2000 HV in the hard particles. The porosity of the wearing layer depends on the process conditions of the spraying and is suitably controlled to be in the interval between 2 and 5 per cent, Class 20 µm (according to Pratt & Whitney's specification). Such a porosity results in good oil adhesiveness to the wearing layer, when it is uncovered, which promotes the maintenance of a cohesive oil film on the running surface of the cylinder liner.

The intermediate layer 9 may be a mixture of molybdenum and molybdenum oxide, wherein the oxide primarily exists bound in pre-oxidized molybdenum, that is, originating from the powdered starting material, which may typically have a particle size of about 6 µm and may typically contain from 2 to 5 per cent by weight of oxygen. Preferably, the porosity of the intermediate layer is about 5 per cent, but the layer may also be applied into a compact layer or into a layer having a porosity of up to 10 per cent. The hardness of the intermediate layer is in the interval from 250 to 750 HV.

The running-in layer 8 may contain graphite balls coated with metal, such as molybdenum, aluminium, silver, or nickel, and the balls may be mixed with silver. The hardness of the running-in layer is in the interval from 70 to 130 HV. As the running-in layer has good dry lubricating properties, the porosity of the running-in layer is not of major importance for maintaining good lubrication between piston rings and liner.

It is possible to apply the running-in layer 8 directly onto the wearing layer 7, but the use of at least one intermediate layer 9 is preferred to achieve a gentle running-in of the piston rings simultaneously with the long life of the liner, which may be obtained when the wearing layer 7 is very hard.

When the liner is put into operation, the running-in layer is quickly worn smooth by the piston rings without these being damaged by the running-in layer, which appears with the surface roughness produced by the spraying, when the liner is put into operation. After the smoothing of the running-in layer, it gets worn off simultaneously with the piston rings wearing themselves down into the intermediate layer 9 or into the hardest wearing layer 7. In line with the wearing-in, the hardness of the running surface increases, and the roughness of the particular layer into which the rings wear themselves, is reduced because the tops of the layer are first worn off. If one or more intermediate layers with a lower hardness than the wearing layer 7 is or are used, the wearing into these layers will take place more rapidly than in the wearing layer 7, and the piston rings will be affected in a more uniform manner, because the micro-hardness of the running surface is more uniform in this case.

As the piston rings do not come into contact with the material of the liner blank, the latter may, of course, be made of another material than steel. The commercial use rendered possible by the invention of liners in which at least the uppermost part of the liner is made of steel, is of special importance in large internal combustion engines, where the development of engines with a higher cylinder output is at present prevented by the limited possibilities of loads on cast iron liners.

## Claims

1. A method of manufacturing a cylinder liner (1) for an internal combustion engine, particularly for a large two-stroke crosshead engine, wherein a liner blank (6) is spray-coated on its cylindrical inner surface with at least one hard wearing layer (7) by means of thermal spraying, such as plasma arc spraying or flame spraying, which layer in its uncovered state may form a running surface for a piston sliding in the liner, and wherein a running-in layer (8) which is softer than the wearing layer is applied to the inner surface of the cylinder liner, **characterized** in that the surface roughness of the hard wearing layer(s) (7) provided by the spraying is maintained, as the running-in layer (8) is applied to the wearing layer surface without any further roughness-reducing mechanical machining thereof, apart from a possible trueing.

2. A method according to claim 1, **characterized** in that the running-in layer (8) is sprayed onto the inner surface of the liner, and that the roughness of the running-in layer (8) provided by the spraying is only smoothed out when the liner is put into operation.

3. A method according to claim 1 or 2, **characterized** in that before the application of the running-in layer (8), the liner (1) is spray-coated with an intermediate layer (9), the hardness of which is lower than the average hardness of the wearing layer (7), but higher than the hardness of the running-in layer.

4. A method according to any one of claims 1-3, **characterized** in that both the wearing layers (7, 9) and the running-in layer (8) are sprayed on to the inner surface of the cylinder liner (1) by means of thermal spraying, and that the layers (7, 8, 9) sprayed on are not substantially subjected to any other machining during manufacturing than a possible trueing.

5. A method according to claim 4, **characterized** in that the powder composition used is adjusted during the spraying so that the layers (7, 8, 9) merge evenly into each other.

6. A cylinder liner (1) for an internal combustion engine, particularly for a large two-stroke crosshead engine, comprising a liner blank (6) which carries on its cylindrical inner surface at least one hard wearing layer (7) which is sprayed on by means of thermal spraying, such as plasma arc spraying or flame spraying, and which may form a running surface for the piston rings of the piston sliding in the liner, when the wearing layer is uncovered and in direct contact with the piston rings, and in its unused condition has a softer running-in layer (8), **characterized** in that the surface roughness of at least 3.2 µm < Ra (N9), and preferably in the interval of 12.5 µm < Ra ≤ 50 µm (from N11 to N12), provided through spraying-on of the hard wearing layer(s) (7), is maintained as the running-in layer is applied to the wearing layer surface without any roughness-reducing, mechanical finishing machining apart from a possible trueing.

7. A cylinder liner according to claim 6, **characterized** in that the running-in layer (8) includes or consists of graphite balls coated with metal, such as molybdenum, aluminium, silver, or nickel, and possibly silver.

8. A cylinder liner according to claim 6 or 7, **characterized** in that between the hard wearing layer (7) and the running-in layer (8), the liner (1) has an intermediate layer (9) of a mixture of molybdenum and molybdenum oxide.

9. A cylinder liner according to any one of claims 6-8, **characterized** in that the blank (6) of the liner is made of steel, that the hardness of the running-in layer (8) is in the interval from 70 to 130 HV, that the hardness of the optional intermediate layer (9) is in the interval from 250 to 750 HV, and that the micro-hardness of the wearing layer (7) is up to 2000 HV.

10. A cylinder liner according to any one of claims 6-9, **characterized** in that the wearing layer (7) consists of a soft matrix comprising chromium, nickel and/or molybdenum, wherein hard particles are embedded, such as Cr₃C₂, Ni₃C, MoC, Cr₂O₃, and/or BN.

## Patentansprüche

1. Verfahren zur Herstellung einer Zylinderlaufbüchse (1) für einen Verbrennungsmotor, insbesondere für einen Zweitakt-Kreuzkopfgroßmotor, wobei ein Laufbüchsenrohling (6) auf seiner zylindrischen Innenfläche mit zumindest einer harten Verschleißschicht (7) durch thermisches Spritzen, wie etwa Plasmabogenspritzen oder Flammspritzen, spritzbeschichtet wird, welche Schicht in ihrem unabgedeckten Zustand eine Lauffläche für einen in der Laufbüchse gleitenden Kolben bilden kann, und wobei eine Einlaufschicht (8), die weicher ist als die Verschleißschicht, auf die Innenfläche der Zylinderlaufbüchse aufgebracht wird, **dadurch gekennzeichnet**, daß die durch das Spritzen geschaffene Oberflächenrauhigkeit der harten Verschleißschicht(en) (7) beim Aufbringen der Einlaufschicht (8) auf die Verschleißschichtoberfläche ohne eine weitere rauhigkeitsmindernde mechanische Bearbeitung derselben, mit Ausnahme eines etwaigen Abrichtens, beibehalten wird.

2. Verfahren nach Anspruch 1, dadurch gekennzeichnet, daß die Einlaufschicht (8) auf die Innenfläche der Laufbüchse gespritzt wird und daß die durch das Spritzen geschaffene Rauhigkeit der Einlaufschicht (8) nur ausgeglättet wird, wenn die Laufbüchse in Betrieb genommen wird.

3. Verfahren nach Anspruch 1 oder 2, dadurch gekennzeichnet, daß die Laufbüchse (1) vor dem Aufbringen der Einlaufschicht (8) mit einer Zwischenschicht (9) spritzbeschichtet wird, deren Härte geringer ist als die Durchschnittshärte der Verschleißschicht (7), jedoch höher als die Härte der Einlaufschicht.

4. Verfahren nach einem der Ansprüche 1 bis 3, dadurch gekennzeichnet, daß sowohl die Verschleißschichten (7,9) als auch die Einlaufschicht (8) auf die Innenfläche der Zylinderlaufbüchse (1) mittels des thermischen Spritzens aufgespritzt werden und daß die aufgespritzten Schichten (7,8,9) im wesentlichen keiner anderen maschinellen Bearbeitung bei der Herstellung als einem etwaigen Abrichten unterzogen werden.

5. Verfahren nach Anspruch 4, dadurch gekennzeichnet, daß die verwendete Pulverzusammensetzung während des Spritzens reguliert wird, so daß die Schichten (7,8,9) gleichmäßig ineinander übergehen.

6. Zylinderlaufbüchse (1) für einen Verbrennungsmotor, insbesondere einen Zweitakt-Kreuzkopfgroßmotor, bestehend aus einem Laufbüchsenrohling (6), der auf seiner zylindrischen Innenfläche zumindest eine harte Verschleißschicht (7) trägt, die durch thermisches Spritzen, wie etwa Plasmabogenspritzen oder Flammspritzen, aufgespritzt ist und die eine Lauffläche für die Kolbenringe des in der Laufbüchse gleitenden Kolbens bilden kann, wenn die Verschleißschicht unabgedeckt ist und in direktem Kontakt mit den Kolbenringen steht, und in seinem unbenutzten Zustand eine weichere Einlaufschicht (8) aufweist, dadurch gekennzeichnet, daß die Oberflächenrauhigkeit von zumindest 3,2 µm < Ra (N9), und vorzugsweise im Bereich von 12,5 µm < Ra ≤ 50 µm (von N11 bis N12), die durch das Aufspritzen der harten Verschleißschicht(en) (7) gebildet ist, beim Auftragen der Einlaufschicht auf die Verschleißschichtoberfläche ohne eine rauhigkeitsmindernde mechanische Finishbearbeitung, abgesehen von einem etwaigen Abrichten, beibehalten ist.

7. Zylinderlaufbüchse nach Anspruch 6, dadurch gekennzeichnet, daß die Einlaufschicht (8) mit Metall, wie etwa Molybdän, Aluminium, Silber oder Nickel beschichtete Graphitkugeln und ggf. Silber umfaßt oder daraus besteht.

8. Zylinderlaufbüchse nach Anspruch 6 oder 7, dadurch gekennzeichnet, daß die Zylinderlaufbüchse (1) zwischen der harten Verschleißschicht (7) und der Einlaufschicht (8) eine Zwischenschicht (9) aus einem Gemisch von Molybdän und Molybdänoxid aufweist.

9. Zylinderlaufbüchse nach einem der Ansprüche 6 bis 8, dadurch gekennzeichnet, daß der Rohling (6) der Laufbüchse von Stahl gebildet ist, daß die Härte der Einlaufschicht (8) im Bereich von 70 bis 130 HV liegt, daß die Härte der wahlweisen Zwischenschicht (9) im Bereich von 250 bis 750 HV liegt und daß die Mikrohärte der Verschleißschicht (7) bis zu 2000 HV beträgt.

10. Zylinderlaufbüchse nach einem der Ansprüche 6 bis 9, dadurch gekennzeichnet, daß die Verschleißschicht (7) aus einer weichen, Chrom, Nickel und/oder Molybdän umfassenden Matrix besteht, in die harte Partikel, wie etwa Cr₃C₂, Ni₃C, MoC, Cr₂O₃ und/oder BN, eingebettet sind.

## Revendications

1. Procédé pour fabriquer une chemise (1) de cylindre pour un moteur à combustion interne, notamment pour un moteur à crosse à deux temps, dans lequel on recouvre la surface intérieure cylindrique d'une ébauche (6) de la chemise en y déposant par pulvérisation au moins une couche d'usure dure (7) au moyen d'une pulvérisation thermique comme par exemple une pulvérisation à arc à plasma ou une pulvérisation à la flamme, laquelle couche peut former, dans son état non recouvert, une surface de circulation pour un piston coulissant dans la chemise, et selon lequel on applique sur la surface intérieure de la chemise cylindrique une couche de rodage (8), qui est plus tendre que la couche d'usure, caractérisé en ce que la rugosité de surface de la ou des couches d'usure (7) formées au moyen de la pulvérisation est maintenue à l'écart d'un dressage possible, étant donné que la couche de rodage (8) est appliquée sur la surface de la couche d'usure sans autre usinage mécanique de cette surface pour en réduire la rugosité.

2. Procédé selon la revendication 1, caractérisé en ce que la couche de rodage (8) est déposée par pulvérisation sur la surface intérieure de la chemise et que la rugosité de la couche de rodage (8) formée au moyen de la pulvérisation est seulement atténuée lorsque la chemise est mise en service.

3. Procédé selon la revendication 1 ou 2, caractérisé en ce qu'avant l'application de la couche de rodage (8), la chemise (1) est recouverte, par pulvérisation, d'une couche intermédiaire (9), dont la dureté est inférieure à la dureté moyenne de la couche d'usure (7), mais est supérieure à la dureté de la couche de rodage.

4. Procédé selon l'une quelconque des revendications 1-3, caractérisé en ce que les deux couches d'usure (7,8) et la couche de rodage (8) sont déposées par pulvérisation sur la surface intérieure de la chemise de cylindre (1) au moyen d'une pulvérisation thermique, et que les couches (7,8,9) ne sont soumises pendant la fabrication sensiblement à aucun usinage autre qu'un éventuel dressage.

5. Procédé selon la revendication 4, caractérisé en ce que la composition à l'état de poudre utilisé est réglée pendant la pulvérisation de sorte que les couches (7,8,9) fusionnent d'une manière uniforme les unes dans les autres.

6. Chemise (1) pour un cylindre de moteur à combustion interne, en particulier pour un gros moteur à crosse à deux temps, comportant une ébauche de chemise (6), qui porte sur sa surface intérieure cylindrique au moins une couche d'usure dure (7), qui est déposée au moyen d'une pulvérisation thermique, comme par exemple une pulvérisation à arc à plasma ou une pulvérisation à la flamme, et qui peut former une surface de circulation pour les segments du piston glissant dans la chemise, lorsque la couche d'usure est découverte et en contact direct avec les segments de piston, et possède, dans son état non utilisé, une couche de rodage plus tendre (8), caractérisé en ce que la rugosité de surface est égale à au moins 3,2 µm < Ra (N9), et de préférence se situe dans l'intervalle de 12,5 pm < Ra ≤ 50 µm (de N11 à N12), formée par dépôt par pulvérisation de la ou des couches d'usure dures (7), est maintenue à l'écart d'un dressage éventuel, lorsque la couche de rodage est appliquée à la surface de la couche d'usure sans aucun usinage de finition mécanique réduisant la rugosité.

7. Chemise de cylindre selon la revendication 6, caractérisée en ce que la couche de rodage (8) inclut, ou est constituée par, des billes de graphite recouvertes par un métal, tel que du molybdène, de l'aluminium, de l'argent ou du nickel et éventuellement de l'argent.

8. Chemise de cylindre selon la revendication 6 ou 7, caractérisée en ce qu'entre la couche d'usure dure (7) et la couche de rodage (8), la chemise (1) possède une couche intermédiaire (9) formée d'un mélange de molybdène et d'oxyde de molybdène.

9. Chemise de cylindre selon l'une quelconque des revendications 6-8, caractérisée en ce que l'ébauche (6) de la chemise est formée d'acier, que la dureté de la couche de rodage (8) se situe dans l'intervalle de 70 à 130 HV, que la dureté de la couche intermédiaire facultative (9) se situe dans l'intervalle allant de 250 à 750 HV et que la microdureté de la couche d'usure (7) atteint une valeur allant jusqu'à 2000 HV.

10. Chemise de cylindre selon l'une quelconque des revendications 6-9, caractérisée en ce que la couche d'usure (7) est constituée par une matrice tendre contenant du chrome, du nickel et/ou du molybdène, dans laquelle sont noyées des particules dures telles que des particules de Cr₃C₂, Ni₃C, MoC, Cr₂O₃ et/ou BN.
